# DEMANDE DE BREVET EUROPEEN

(11) **EP 2 624 410 A1**
(43) Date de publication de la demande: **07.08.2013**
(21) Numéro de dépôt: 13152658.4
(22) Date de dépôt: 25.01.2013
(51) Int. Cl.: H02J 7/36

(54) **Circuit électronique de récuperation, de stockage et de restitution d'énergie électrique et le procédé associé**

(30) Priorité: 01.02.2012 FR 1250937
(71) Demandeur: Intesens, 31650 Saint-Orens-de-Gameville (FR); LAAS-CNRS, 31077 Toulouse Cedex 4 (FR)
(72) Inventeur: Lafontan, Xavier, 31650 Saint-Orens-de-Gameville (FR); Boitier, Vincent, 31400 Toulouse (FR); Montheard, Romain, Alain, Renaud, 31400 Toulouse (FR); Bafleur, Maryse, Suzanne, 31320 Castanet Tolosan (FR); Dilhac, Jean-Marie, René, 31000 Toulouse (FR)
(74) Mandataire: Deschamps, Samuel

(57) **Abrégé**

L'invention concerne un circuit électronique de récupération, de stockage et de restitution d'énergie comportant une source de tension apte à générer une énergie électrique, un élément de stockage apte à stocker l'énergie électrique issue de la source de tension et à restituer cette énergie électrique à une charge, caractérisé en ce que l'élément de stockage comporte au moins deux capacités (31, 36) connectées selon une topologie modulable, au moins un interrupteur commandé (32, 34, 35) apte à modifier la topologie des capacités (31, 36) et un circuit de commande apte à commander l'état de l'interrupteur commandé (32, 34, 35) et apte à mémoriser une topologie courante.

## Description

DOMAINE TECHNIQUE DE L'INVENTION

L'invention concerne un circuit électronique de récupération, de stockage et de restitution d'énergie. L'invention concerne également un procédé de commande du circuit électronique.

L'invention trouve une application particulièrement avantageuse mais non restrictive dans le contexte de la récupération d'énergie ambiante pour l'alimentation de dispositifs autonomes. L'invention concerne plusieurs domaines, notamment la domotique, l'automobile, l'aéronautique, le spatial, le médical, le militaire et les centrales nucléaires.

**ETAT DE LA TECHNIQUE**

On connaît des dispositifs autonomes permettant d'alimenter un actionneur ou un capteur à l'aide d'un système de récupération d'énergie tel que des panneaux solaires, des éoliennes ou des thermogénérateurs. Ces dispositifs autonomes comportent au moins un élément de stockage. L'élément de stockage emmagasine de l'énergie provenant du système de récupération d'énergie lorsque la charge, capteur ou actionneur, ne consomme pas toute l'énergie produite par le système de récupération d'énergie. En outre, l'élément de stockage restitue de l'énergie à la charge lorsque le système de récupération d'énergie n'est pas capable d'alimenter la charge. L'élément de stockage correspond généralement à une batterie électrochimique, ou à une capacité du type condensateur ou super-condensateur électrostatique.

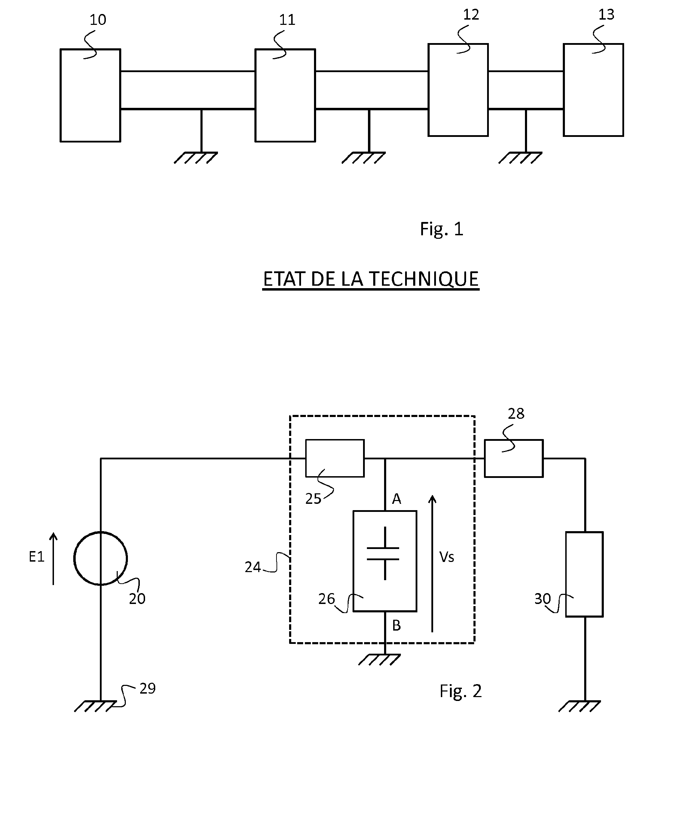

La Figure 1 montre l'architecture fonctionnelle d'un circuit électronique de récupération, de stockage et de restitution d'énergie de l'état de la technique. Le système de récupération d'énergie est modélisé par une source de tension 10, regroupant par exemple un transducteur d'énergie récupérant l'énergie ambiante, et un convertisseur délivrant une tension continue d'amplitude variable en fonction de la quantité d'énergie récupérée. La source de tension 10 permet de produire une énergie capable d'alimenter une charge 13, par exemple un actionneur ou un système d'éclairage.

Un élément de stockage 11 est relié à la source de tension 10 afin de récupérer une partie de l'énergie délivrée par la source de tension 10 qui n'est pas consommée par la charge 13. L'élément de stockage 11 est également connecté à la charge 13 afin d'alimenter la charge 13 lors d'un appel de puissance que le dispositif de récupération d'énergie ne pourrait pas fournir, ou bien, pour une durée limitée, lorsque le dispositif de récupération d'énergie ne récupère aucune énergie. Un régulateur de tension 12 permet d'alimenter la charge 13 avec une tension sensiblement constante tant que la tension d'entrée du régulateur de tension 12 reste supérieure à une valeur minimale. Le régulateur 12 peut, par exemple, être du type LDO (pour « Low Drop Out » en anglais), c'est-à-dire présentant une faible tension de déchet.

Généralement, on considère que l'autonomie du circuit de la Figure 1 est d'autant plus grande que la capacité de l'élément de stockage 11 est importante. Cependant, plus la capacité de stockage de l'élément de stockage 11 est importante plus le temps de charge est important ce qui peut avoir comme effet de ne pas charger suffisamment l'élément de stockage 11 dans un temps donné pour pouvoir utiliser l'énergie emmagasinée. Par contre, si la capacité de stockage est trop faible, l'élément de stockage 11 peut ne pas récupérer toute l'énergie délivrée par la source de tension 10 et ne permettra qu'une autonomie limitée.

Dans la phase de restitution de l'énergie stockée dans l'élément de stockage 11, une partie de l'énergie reste stockée dans l'élément de stockage 11 et ne peut être traitée fonctionnellement par le régulateur de tension 12.

**OBJET DE L'INVENTION**

La présente invention a justement pour but de remédier aux inconvénients décrits précédemment. A cet effet, l'invention propose un circuit comportant un élément de stockage ayant une topologie modulable assurant un temps de charge et une déperdition d'énergie résiduelle inférieurs à une capacité classique équivalente, tout en améliorant le transfert d'énergie entre la source et l'élément de stockage en question.

A cet effet, selon un premier aspect, l'invention concerne un circuit électronique de récupération, de stockage et de restitution d'énergie comportant une source de tension apte à générer une énergie électrique, un élément de stockage apte à stocker l'énergie électrique issue de la source de tension et à restituer cette énergie électrique à une charge.

L'invention est caractérisée en ce que l'élément de stockage comporte au moins deux capacités connectées selon une topologie modulable, au moins un interrupteur commandé apte à modifier la topologie des capacités et un circuit de commande apte à commander l'état de l'interrupteur commandé et apte à mémoriser une topologie courante. On entend par « topologie d'un circuit électronique », la disposition des liaisons électriques entre les différents composants du circuit électronique.

L'invention présente l'avantage de proposer une reconfiguration autonome de l'élément de stockage améliorant le temps de charge pour une capacité équivalente. Une reconfiguration du circuit électronique permet d'améliorer le transfert d'énergie entre le générateur et l'élément de stockage durant la phase de stockage et permet également d'améliorer le taux d'énergie stockée restituée à la charge durant la phase de restitution.

Selon une réalisation, le circuit de commande comporte des moyens pour modifier l'état de l'interrupteur commandé en fonction de la topologie courante, de l'état de charge de l'élément de stockage et de la tension appliquée par la source de tension.

Selon une réalisation, les capacités de l'élément de stockage sont connectées à au moins un réseau d'interrupteurs commandés comprenant un premier interrupteur connecté entre un premier point d'interconnexion et une entrée, un dernier interrupteur connecté entre un deuxième point d'interconnexion et une sortie, et un interrupteur intermédiaire connecté entre l'entrée et la sortie.

Selon une réalisation, une première capacité de l'élément de stockage est connectée entre le deuxième point d'interconnexion et l'entrée d'un réseau d'interrupteurs commandés.

Selon une réalisation, une dernière capacité de l'élément de stockage est connectée entre le premier point d'interconnexion et la sortie d'un réseau d'interrupteurs commandés.

Selon une réalisation, une capacité intermédiaire de l'élément de stockage est connectée entre la sortie d'un réseau d'interrupteurs commandés et l'entrée d'un autre réseau d'interrupteurs commandés.

Selon un deuxième aspect, l'invention concerne un procédé de commande du circuit électronique de récupération, de stockage et de restitution d'énergie, caractérisé en ce que, lorsque qu'au moins deux capacités de l'élément de stockage sont dans une topologie série, le procédé comporte l'étape de mesurer un rapport entre la tension aux bornes de l'élément de stockage et la tension appliquée par la source de tension et commander l'interrupteur de sorte à connecter dans une topologie parallèle au moins deux capacités lorsque le rapport est supérieur à un seuil de charge prédéfini.

On entend par « topologie série de deux composants », l'existence d'une connexion électrique entre la sortie du premier composant avec l'entrée du second composant de telle sorte que les deux composants forment un dipôle, l'entrée du dipôle étant l'entrée du premier composant et la sortie du dipôle étant la sortie du deuxième composant.

Selon une mise en oeuvre, le seuil de charge prédéfini est compris entre 60 et 70% de la tension délivrée par la source de tension.

Selon une mise en oeuvre, lorsque qu'au moins deux capacités de l'élément de stockage sont dans une topologie parallèle, le procédé comporte l'étape de mesurer le rapport entre la tension aux bornes de la charge et la tension aux bornes de la source de tension, commander l'interrupteur de sorte à connecter dans une topologie série au moins deux capacités lorsque le rapport est inférieur à un seuil de décharge prédéfini.

On entend par « topologie parallèle de deux composants », l'existence d'une connexion électrique entre les deux entrées et les deux sorties des deux composants.

Selon une mise en oeuvre, le seuil de décharge prédéfini est compris entre 30 et 40% de la tension appliquée à la charge.

BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention. Elles montrent :

Figure 1 : une représentation schématique d'un circuit électronique de récupération, de stockage et de restitution d'énergie selon l'état de la technique ;

Figure 2 : une représentation schématique d'un circuit électronique de récupération, de stockage et de restitution d'énergie selon l'invention ;

Figure 3 : une représentation schématique d'un élément de stockage selon un premier mode de réalisation;

Figure 4 : une représentation schématique d'un élément de stockage selon un deuxième mode de réalisation;

Figure 5 : une représentation schématique du circuit de commande des interrupteurs commandés de l'élément de stockage selon un mode de réal isation;

Figure 6 : une représentation schématique des schémas équivalents successifs de l'élément de stockage selon une mise en oeuvre du deuxième mode de réalisation;

Figure 7 : une représentation graphique, en fonction du temps, de la charge de l'élément de stockage de l'invention;

Figure 8 : une représentation graphique, en fonction du temps, de la puissance électrique reçue par l'élément de stockage de l'invention; et

Figure 9 : une représentation graphique, en fonction du temps, de l'efficacité du transfert d'énergie (rapport de la puissance transférée à la puissance qui serait transférée dans le cas idéal) à partir de l'élément de stockage de l'invention;

Les éléments identiques, similaires ou analogues, conservent la même référence d'une Figure à l'autre.

**DESCRIPTION D'EXEMPLES DE REALISATION DE L'INVENTION**

La Figure 2 montre un circuit électronique de récupération, de stockage et de restitution d'énergie comprenant un système de récupération d'énergie modélisé par une source 20 de tension, regroupant par exemple un transducteur d'énergie récupérant l'énergie ambiante, et un convertisseur délivrant une tension positive E1 d'amplitude variable en fonction de la quantité d'énergie récupérée. Une charge 30 du circuit est connectée entre une masse 29 du circuit et un régulateur de tension de sortie 28 lui-même connecté en série avec la sortie du sous-circuit de stockage 24. Le régulateur de tension de sortie 28 permet d'alimenter la charge 30 avec une tension constante tant que la tension d'entrée du régulateur de tension 28 reste supérieure à une valeur minimale. Le régulateur 28 peut, par exemple, être du type LDO (pour « Low Drop Out » en anglais), c'est-à-dire présentant une faible tension de déchet.

Le sous-circuit de stockage 24 permet d'alimenter la charge 30 lors d'un appel de puissance que le dispositif de récupération d'énergie ne pourrait pas fournir, ou bien, pour une durée limitée, lorsque le dispositif de récupération d'énergie ne récupère aucune énergie. Le sous-circuit de stockage 24 comporte un régulateur 25 connecté entre la source 20 et le régulateur de tension 28 et un élément 26 de stockage connecté entre deux points d'interconnexion A et B. Le premier point d'interconnexion A est situé entre les deux régulateurs 25 et 28 tandis que le deuxième point d'interconnexion B correspond à la masse 29 du circuit.

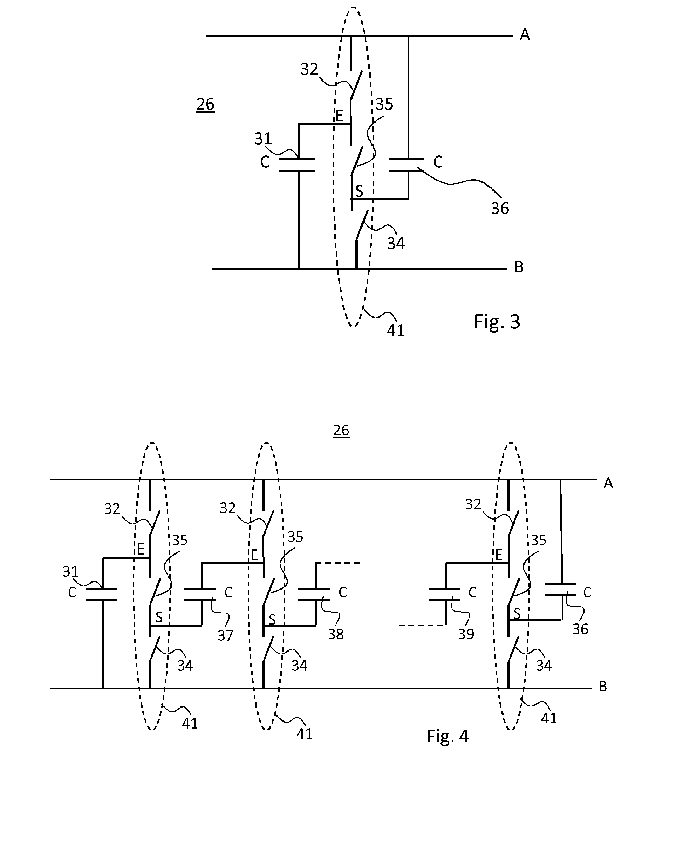

La Figure 3 montre un élément 26 de stockage selon un premier mode de réalisation de l'invention. Dans cette réalisation, l'élément 26 de stockage comporte deux capacités 31, 36 interconnectées par un réseau 41 de trois interrupteurs commandés 32, 34, 35. Le réseau 41 comporte un premier interrupteur 32 connecté entre le premier point d'interconnexion A et une entrée E. Un dernier interrupteur 34 est connecté entre le deuxième point d'interconnexion B et une sortie S. Un interrupteur intermédiaire 35 est connecté entre l'entrée E et la sortie S. Une première capacité 31 est connectée entre le deuxième point d'interconnexion B et l'entrée E du réseau 41 et une dernière capacité 36 est connectée entre le premier point d'interconnexion E et la sortie du réseau 41.

Les interrupteurs 32, 34, 35 sont commandés presque simultanément. En variante, il peut être nécessaire d'utiliser des états intermédiaires pour commander les interrupteurs 32, 34, 35 séquentiellement. La consigne des interrupteurs 32, 34 est complémentaire avec la consigne de l'interrupteur 35. Lorsque les interrupteurs 32, 34 sont fermés, l'interrupteur 35 est ouvert formant ainsi une topologie parallèle des deux capacités 31, 36. Lorsque les interrupteurs 32, 34 sont ouverts, l'interrupteur 35 est fermé formant ainsi une topologie série des deux capacités 31, 36.

De plus, dans cet exemple non limitatif, la valeur des capacités 31, 36 est égale à C. Lorsque les capacités 31, 36 sont dans une topologie parallèle, la capacité équivalente est égale à 2C. Lorsque les capacités 31, 36 sont dans une topologie série, la capacité équivalente est alors égale à C/2. La capacité équivalente de l'élément 26 de stockage présente donc un rapport de multiplication de 4 entre la topologie série et la topologie parallèle.

Le même principe est réalisable avec un plus grand nombre de capacités. La Figure 4 montre un exemple d'élément 26 de stockage comportant des capacités intermédiaires 37-39 reliées à des réseaux 41 d'interrupteurs commandés 32, 34, 35. La première capacité 31 et la dernière capacité 36 sont connectées comme décrit sur la Figure 2. Le circuit de l'élément 26 de stockage comporte en outre des capacités intermédiaires 37-39 connectées entre une sortie S d'un réseau 41 d'interrupteurs commandés 32, 34, 35 et une entre E d'un autre réseau 41 d'interrupteurs commandés 32, 34, 35. L'élément 26 de stockage comporte un nombre de réseau 41 d'interrupteurs commandés 32, 34, 35 égal au nombre de capacités 31, 36-39 moins une. Chaque réseau 41 d'interrupteurs commandés 32, 34, 35 étant commandé indépendamment des autres réseaux 41.

Avantageusement, cette structure utilise des capacités élémentaires identiques réduisant ainsi les transferts de charge lors des commutations des interrupteurs commandés. La limitation des transferts de charge limite la dissipation d'énergie dues aux impédances série parasites des capacités.

Quel que soit le mode de réalisation, les interrupteurs commandés sont commandés en fonction de la topologie courante de l'élément 26 de stockage, de son état de charge, ainsi que de la tension délivrée par le dispositif de récupération d'énergie.

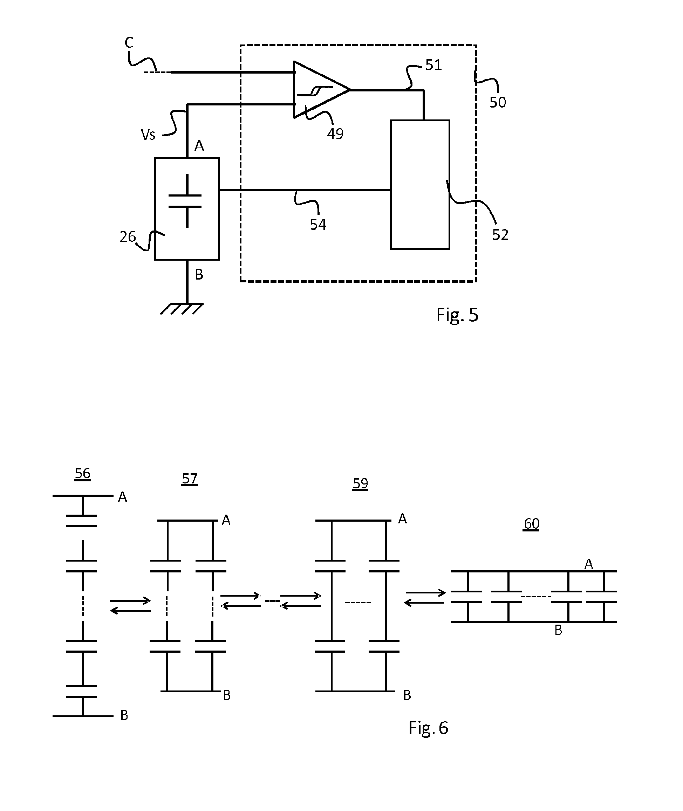

La Figure 5 montre un circuit de commande 50 des interrupteurs commandés 32, 34, 35 décrits dans les Figures 3 et 4. Un comparateur à hystérésis 49 compare une consigne C élaborée à partir de la tension de sortie du générateur 25 avec la tension Vs disponible aux bornes de l'élément 26 de stockage. Un contrôleur logique 52 mémorise la topologie courante de l'élément 26 de stockage. Lorsque la charge 30 demande moins d'énergie que l'énergie générée par le dispositif de récupération d'énergie, le contrôleur logique 52 modifie la position des interrupteurs lorsque la tension Vs est supérieure à un seuil de charge. Préférentiellement, le seuil de charge est compris entre 60 et 70% de la tension E1 délivrée par le dispositif de récupération d'énergie; encore plus préférentiellement le seuil de charge est égal à 2/3 de la tension E1 délivrée par le dispositif de récupération d'énergie. De même, lorsque la charge 30 demande plus d'énergie que l'énergie générée par le dispositif de récupération d'énergie, le contrôleur logique 52 modifie la position des interrupteurs lorsque la tension Vs est inférieure à un seuil de décharge. Préférentiellement, le seuil de décharge est compris entre 30 et 40% de la tension Vs ; encore plus préférentiellement le seuil de décharge est égal à 1/3 de la tension E1 délivrée par le dispositif de récupération d'énergie.

La Figure 6 montre les différentes topologies du circuit de l'élément 26 de stockage de la Figure 4 en fonction de la commande appliquée sur les interrupteurs commandés 32, 34, 35 de chaque réseau 41. Le circuit de la Figure 4 peut prendre plusieurs topologies, par exemple les topologies 56, 57, 59, 60 ainsi que des topologies intermédiaires entre les topologies 57, 59 dépendant du nombre d'étages intermédiaires 40. La topologie 56 représente une connexion de toutes les capacités en série. Cette topologie 56 minimise la capacité équivalente entre les points d'interconnexions A et B. Au contraire, la topologie 60 représente une connexion de toutes les capacités en parallèle. Cette topologie 60 maximise la capacité équivalente entre les points d'interconnexions A et B.

La topologie 57 représente deux branches en parallèle comportant chacune des capacités en série. L'invention permet de passer de la topologie 56 à la topologie 57 par deux moyens. Si le circuit de la Figure 4 se trouve dans la topologie 56 et que la tension Vs est supérieure au seuil de charge, les interrupteurs commandés 32, 34, 35 d'un ou plusieurs réseaux 41 modifient la topologie 56 vers la topologie 57. Inversement, si le circuit de la Figure 4 se trouve dans la topologie 57 et que la tension Vs est inférieure au seuil de décharge, les interrupteurs commandés 32, 34, 35 d'un ou plusieurs réseaux 41 modifient la topologie 57 vers la topologie 56. Le passage entre les topologies 59 et 60 ainsi que le passage entre toutes les topologies intermédiaires est équivalent.

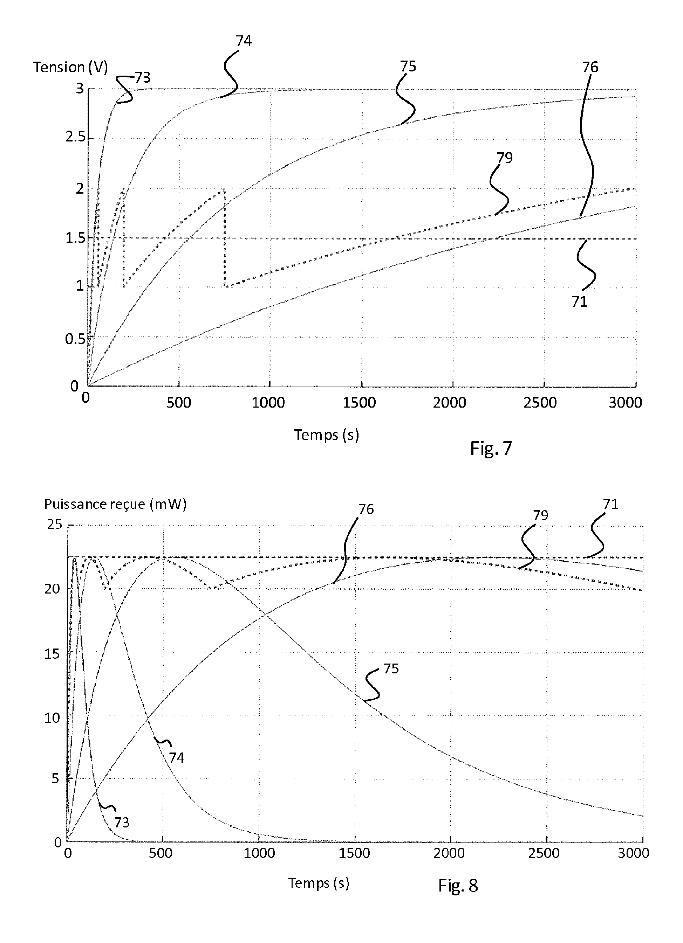

La Figure 7 montre sur la courbe 79 l'évolution de la tension aux bornes de l'élément 26 de stockage au cours du temps lors d'une phase de charge comportant trois modifications de la topologie du circuit de l'élément 26 de stockage. Les courbes 73, 74, 75, 76 montrent la charge d'une capacité classique de valeur fixe, respectivement de 0.5F, 2F, 8F et 32F.

A l'état initial (au temps 0), les capacités classiques (73-76) ainsi que l'élément 26 de stockage sont totalement déchargés. Une tension de 3V est appliquée aux bornes des capacités classiques et de l'élément 26 de stockage. L'élément 26 de stockage comporte 8 capacités connectées en série selon la topologie 56 de la Figure 6. A l'état initial, la capacité équivalente de l'élément 26 de stockage est égale à 0.5F et la courbe 79 de charge de l'élément 26 de stockage se confond avec la courbe 73 de charge de la capacité classique de 0.5F.

Lorsque la tension de charge de l'élément 26 de stockage est égale à 2/3 de la tension appliquée à ses bornes, soit 2V, la topologie de l'élément 26 de stockage est modifiée pour prendre la topologie 57 de la Figure 6. La capacité équivalente de l'élément 26 de stockage est multipliée par 4 et devient égale à 2F. La courbe 79 montre que la tension de charge de l'élément 26 de stockage est alors réduite en proportion.

Lorsque la tension de charge de l'élément 26 de stockage est encore égale à 2/3 de la tension appliquée à ses bornes, la topologie de l'élément 26 de stockage est modifiée pour correspondre aux topologies 59 puis 60 de la Figure 6 avec une capacité équivalente de 8F puis de 32F.

La Figure 8 représente la puissance reçue par l'élément 26 de stockage dans les mêmes conditions de mesure que la Figure 7. La forme de la courbe obtenue grâce aux changements de topologie permet de tendre vers la courbe 71 représentant la puissance reçue dans le cas idéal. L'invention permet ainsi de maximiser l'énergie transférée vers la charge par rapport au cas des capacités classiques de valeur fixe.

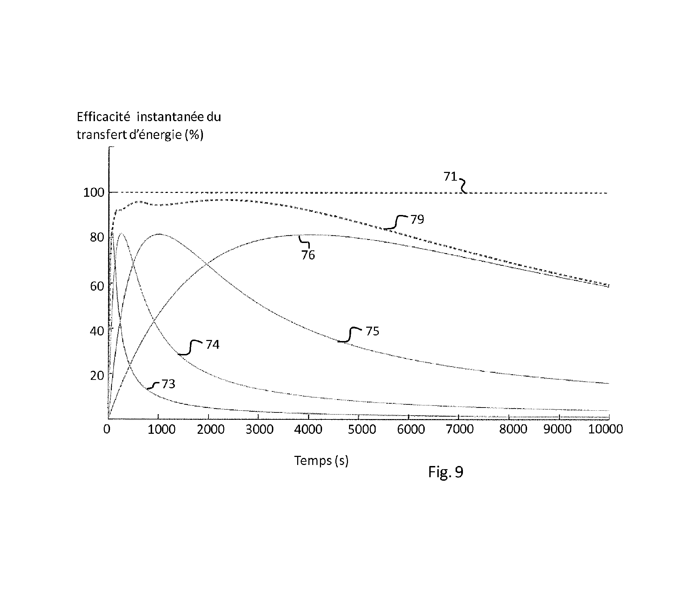

La Figure 9 montre le pourcentage d'énergie transférée au cours du temps entre l'élément 26 de stockage et la charge 30 lors de la phase de restitution d'énergie. Les courbes 73, 74, 75, 76 montrent le pourcentage d'énergie transférée des capacités classiques, respectivement de 0.5F, 2F, 8F et 32F. A l'état initial, les capacités classiques (73-76) ainsi que l'élément 26 de stockage sont totalement chargés. Les capacités classiques montrent un pic de l'énergie transférée. Plus la capacité est faible (courbes 73, 74), plus le pic de l'énergie transférée est bref et précoce. Pour des valeurs plus fortes, une bonne efficacité est obtenue pendant un temps plus long, mais plus tardivement, au risque de ne plus disposer d'énergie à capturer dans l'environnement par la source 20, si l'énergie environnementale est intermittente.

## Revendications

1. Circuit électronique de récupération, de stockage et de restitution d'énergie comportant :
- une source (20) de tension apte à générer une énergie électrique,
- un élément (26) de stockage apte à stocker l'énergie électrique issue de la source (20) de tension et à restituer cette énergie électrique à une charge (30),
**caractérisé en ce que** l'élément (26) de stockage comporte:
- au moins deux capacités (31, 36-39) connectées selon une topologie modulable,
- au moins un interrupteur commandé (32, 34, 35) apte à modifier la topologie des capacités (31, 36-39) et
- un circuit de commande apte à commander l'état de l'interrupteur commandé (32, 34, 35) et apte à mémoriser une topologie courante.

2. Circuit selon la revendication 1, **caractérisé en ce que** le circuit de commande comporte des moyens pour modifier l'état de l'interrupteur commandé (32, 34, 35) en fonction de la topologie courante, de l'état de charge de l'élément (26) de stockage et de la tension appliquée par la source (20) de tension.

3. Circuit électronique selon la revendication 1 ou 2, **caractérisé en ce que** les capacités (31, 36-39) de l'élément (26) de stockage sont connectées à au moins un réseau (41) d'interrupteurs commandés (32, 34, 35) comprenant :
- un premier interrupteur (32) connecté entre un premier point d'interconnexion (A) et une entrée (E),
- un dernier interrupteur (34) connecté entre un deuxième point d'interconnexion (B) et une sortie (S), et
- un interrupteur intermédiaire (35) connecté entre l'entrée (E) et la sortie (S).

4. Circuit électronique selon la revendication 3, **caractérisé en ce qu'**une première capacité (31) de l'élément (26) de stockage est connectée entre le deuxième point d'interconnexion (B) et l'entrée (E) d'un réseau (41) d'interrupteurs commandés (32, 34, 35).

5. Circuit électronique selon la revendication 3 ou 4, **caractérisé en ce qu'**une dernière capacité (36) de l'élément (26) de stockage est connectée entre le premier point d'interconnexion (A) et la sortie (S) d'un réseau (41) d'interrupteurs commandés (32, 34, 35).

6. Circuit électronique selon l'une des revendications 3 à 5, **caractérisé en ce qu'**une capacité intermédiaire (37-39) de l'élément (26) de stockage est connectée entre la sortie (S) d'un réseau (41) d'interrupteurs commandés (32, 34, 35) et l'entrée (E) d'un autre réseau (41) d'interrupteurs commandés (32, 34, 35).

7. Procédé de commande du circuit électronique de récupération, de stockage et de restitution d'énergie selon l'une des revendications 1 à 6, **caractérisé en ce que**, lorsque qu'au moins deux capacités (31, 36-39) de l'élément (26) de stockage sont dans une topologie série, le procédé comporte l'étape de :
- mesurer un rapport entre la tension (Vs) aux bornes de l'élément (26) de stockage et la tension (E1) appliquée par la source (20) de tension et
- commander l'interrupteur commandé (32, 34, 35) de sorte à connecter dans une topologie parallèle au moins deux capacités (31, 36-39) lorsque le rapport est supérieur à un seuil de charge prédéfini.

8. Procédé selon la revendication 7, **caractérisé en ce que** le seuil de charge prédéfini est compris entre 60 et 70% de la tension (E1) délivrée par la source (20) de tension.

9. Procédé selon la revendication 7 ou 8, **caractérisé en ce que**, lorsque qu'au moins deux capacités (31, 36-39) de l'élément (26) de stockage sont dans une topologie parallèle, le procédé comporte l'étape de :
- mesurer le rapport entre la tension (Vs) aux bornes de la charge (30) et la tension (E1) aux bornes de la source (20) de tension,
- commander l'interrupteur commandé (32, 34, 35) de sorte à connecter dans une topologie série au moins deux capacités (31, 36-39) lorsque le rapport est inférieur à un seuil de décharge prédéfini.

10. Procédé selon l'une des revendications 9, **caractérisé en ce que** le seuil de décharge prédéfini est compris entre 30 et 40% de la tension (Vs) appliquée par la charge (30).
